# EUROPEAN PATENT SPECIFICATION

(11) **EP 1 100 056 B1**
(45) Date of publication and mention of the grant of the patent: **03.03.2004**
(21) Application number: 00123440.0
(22) Date of filing: 03.11.2000
(51) Int. Cl.: G07F 7/08, G07F 19/00

(54) **Online payment transaction method using a prepaid card, and associated card**
Verfahren zum Durchführen einer On-Line Zahlungstransaktion mit einer vorausbezahlten Karte und zugeordnete Karte
Méthode pour réaliser une transaction de paiement online utilisant une carte prépayée, et carte associée

(30) Priority: 11.11.1999 IT MI992363
(43) Date of publication of application: 16.05.2001
(73) Proprietor: Threecodex S.r.l., 20135 Milano (IT)
(72) Inventor: Colli, Roberto, 20154 Milano (IT)
(74) Representative: Modiano, Guido, Dr.-Ing.

(56) References cited:
- EP-A- 0 921 487
- WO-A-96/38801
- WO-A-99/33033
- WO-A-99/49404
- DE-A- 19 716 068
- FR-A- 2 747 962
- US-A- 5 577 109
- US-A- 5 673 309

## Description

The present invention relates to an online payment transaction method using a prepaid card and to the associated card to be used in the method.

It is known that the extensive development of telecommunications networks, such as for example the Internet, has allowed, and in the future will allow to an ever-increasing extent, to purchase goods and services directly online, simply by filling-in an appropriate form which is displayed on the user's screen and in which the user, after selecting the goods or service to purchase, must specify his data and his credit card number in order to be able to make the purchase.

However, the need to enter the credit card number and to send it as data over the network causes considerable concern in users, who do not trust the security of the transmission of the data item (credit card number), which if acquired fraudulently would allow third parties to freely use online the credit card of the legitimate owner.

It should also be noted that in most cases the privacy of the user who makes online purchases is not maintained, since the statements of account provided by credit card operators following purchases made by a customer are obviously not anonymous, and therefore if a user makes a purchase that he does not want others to know about, the arrival of a statement of account thwarts his hopes of secrecy.

Moreover, the fact should be noted that many users of computer networks such as the Internet have an age whereby they do not own a credit card and therefore would have to ask for permission from parents or relatives who own a credit card in order to be able to make purchases.

Moreover, as mentioned, notwithstanding the ever-increasing diffusion of credit cards, their online use always causes user concern, and this clearly does not help the growth of e-commerce, which thanks to networks such as the Internet may really experience explosive growth and involve an ever larger number of companies.

US-A- 5 577 109 discloses a prepaid card with an activation code and a secret code.

The aim of the present invention is to provide an online payment transaction method using a card, wherein the transaction is substantially secure and in any case the damage that the user might incur is modest.

Within this aim, an object of the present invention is to provide an online payment transaction method using a card in which access to use of the card is controlled by a double security system, so as to ensure that only the authorized user is using the card involved.

Another object of the present invention is to provide an online payment transaction method using a card which allows substantially to eliminate credit card operators from the process, allowing savings for both users and retailers.

Another object of the present invention is to provide a card for use with the above-cited method which is simple to provide.

Another object of the present invention is to provide an online payment transaction method using a card which is highly reliable, relatively simple and at competitive costs.

This aim and these and other objects which will become better apparent hereinafter are achieved by an online payment transaction method using a card, as defined in claim 1.

Further characteristics and advantages of the present invention will become better apparent from the following detailed description of a preferred but not exclusive embodiment of the method according to the invention, illustrated only by way of non-limitative example in the accompanying drawings, wherein:
Figure 1 is a block diagram which shows in a simplified manner the steps of the method according to the present invention; and
Figure 2 is a schematic view of an embodiment of a card which can be used with the method according to the present invention.

### DESCRIPTION OF THE PREFERRED EMBODIMENTS

With reference to the above-cited figures, the method according to the present invention uses a card, designated by the reference numeral 1, of the prepaid type, i.e., a card which the user purchases for a preset amount, which is the credit of the user available to make online purchases.

The card 1 is conveniently provided with at least one activation code 2, for example a magnetic code, which is applied to said card and is adapted to validate the card when it is distributed to the user who purchases it.

Moreover, on the card 1 there is at least one code 3 which is secret and is initially covered and therefore not legible.

The code 3 is read by the user, if he wishes to make the first purchase, by scratching off or otherwise removing the portion that covers the code 3, in order to allow to view the code and enter it during a payment transaction performed as a consequence of an online purchase.

The method according to the invention therefore entails a first step in which the card 1 is delivered to a user, for a corresponding prepaid amount which the user pays to an operator 5 of the service, which can be the same organization that distributes the card or a separate distributor 4.

The card 1 is firstly activated by passing it through a reader which detects the activation code 2 that is present on the card and thus allows the user to use the card.

Conveniently, the user must in turn activate the card at the operator 5 and this "personalized" activation occurs by transmitting to the operator 5 the secret code 3 together with a password which allows to ensure that the person making a purchase with the card 1 is actually the owner of the card.

The initial activation of the card 1 at the operator 5 creates a sort of "account" of the user at the operator 5, the balance of said account being equal to the cost of the prepaid card that the user purchased.

When the user wishes to make a purchase at a retailer 6 of goods or services, the retailer himself transmits to the user, once said user has chosen the goods or service, a reference number 7 which is specific to the retailer 6 and is transmitted by the user to the operator 5 of the service together with his secret number 3, obviously after entering the previously described password.

The retailer 6 further transmits a reservation number to the user, who in turn must transmit it to the operator 5.

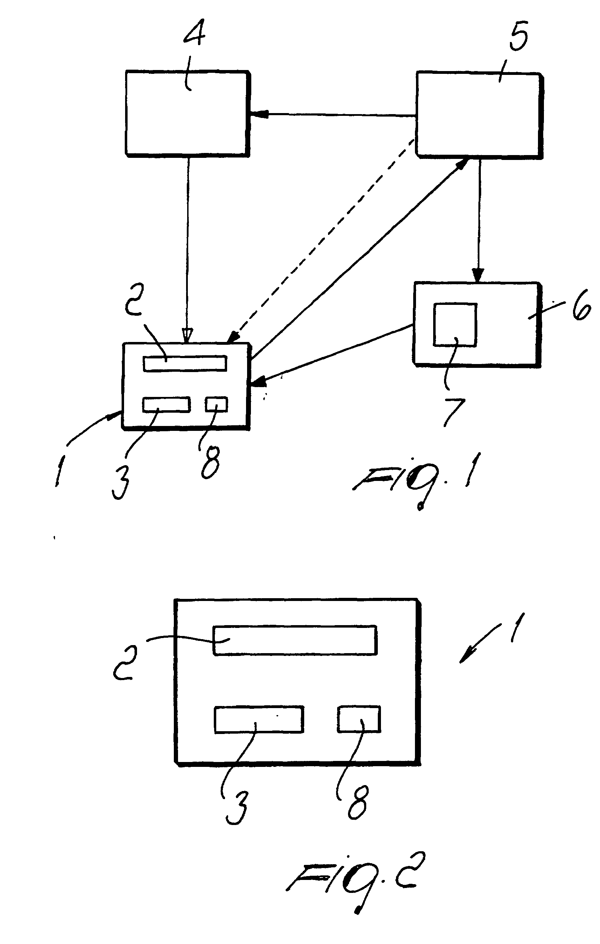

The password is designated by the reference numeral 8 in Figure 1 and Figure 2 by way of example, but this is of course only a graphical example, since the password must be known only by the owner of the card 1 and therefore is in no way written on the card.

In practice, the user can activate the service only if he sends the password 8, together with the secret code 3, to the card operator 5 together with the reference number sent by the retailer 6, which identifies that particular retailer.

At this point the transaction is performed and the operator 5 assigns the amount that the user must pay directly to the retailer 6, also transmitting the reservation number to the retailer.

In this manner it is possible to perform an online payment transaction without resorting to a credit card and most of all without having to resort to entering the credit card number and sending it online.

The user enters the secret code that is present on the card 1, which however, without association with the corresponding password chosen by the user, has no effect on the virtual "account" that the user has opened at the card operator 5.

Moreover, since no personal data, such as name, surname and address, are sent to the card operator 5, and since the operator 5 sends no "statement of account" to the user, full anonymity of the operations performed by the user is guaranteed, thus ensuring his confidentiality.

The above-described method is particularly useful for online purchases, for example on the Internet, and for all users who for any reason do not own a credit card or in any case do not trust sending their credit card number over a computer network to purchase goods or a service.

Moreover, the above-described method allows to avoid direct involvement of credit card operators in the transaction, since the card can be controlled by an operator who is not tied to conventional credit card operators and therefore the commissions can be reduced, since there are no running costs such as statements of account to be sent to customers and the like.

In practice it has been observed that the method according to the invention fully achieves the intended aim and objects, since it allows to make a transaction by means of a prepaid card online without having to report a credit card number or the like.

Therefore, in the worst case in which the secret code number and the keyword both become known to a fraudulent user, the amount that the user would lose would be at the most equal to the balance of the prepaid card that he purchased.

This of course does not occur with a conventional credit card.

Moreover, if the user purchases a second prepaid card before the first one is fully used, the credit remaining from the first prepaid card can be transferred to the second prepaid card, and so forth. In this manner, the user can create for himself a "virtual account" with the card operator.

The method thus conceived is susceptible of numerous modifications and variations. The scope of the invention is defined by the appended claims.

## Claims

1. An online payment transaction method using a card, comprising the steps of:
preparing a prepaid card (1) meant to be purchased by a user;
said prepaid card containing at least one activation code (2) and at least one secret code (3);
activating, by a card operator (5), said prepaid card (1) by passing said card through a reader to detect said at least one activation code (2);
activating said prepaid card (1) on the part of the user by transmitting said at least one secret code (3), together with a user-defined password (8), to the operator (5) of said prepaid card (1);
creating an account of the user at said operator (5), the balance of said account being equal to the cost of said prepaid card (1);
when said user makes a purchase online, receiving, from a retailer (6) from which said user wishes to make said purchase, a unique reference code (7) which identifies said retailer, and sending said reference code (7) to said operator (5) together with said secret code (3) and said user-defined password (8);
said card operator (5) enabling the purchase at said retailer (6).

2. The method according to claim 1, **characterized in that** the step of firstly activating said prepaid card (1) reading said activation code (2) is performed by the card operator (5) just before said prepaid card (1) is delivered to the user.

3. The method according to claim 1, **characterized in that** said step of sending said user-defined password (8) to said card operator (5), together with said secret code (3), must be performed at each purchase that the user wishes to make.

4. The method according to claim 1, **characterized in that** said secret code (3) that is present on said prepaid card is not legible when said card is being distributed to said user.

## Patentansprüche

1. Online-Zahlungstransaktionssystem unter Verwendung einer Karte mit den Schritten:
Vorbereiten einer vorbezahlten Karte (oder Prepaid-Karte) (1), die dazu vorgesehen ist, durch einen Benutzer gekauft zu werden;
wobei die Prepaid-Karte mindestens einen Aktivierungscode (2) und mindestens einen Geheimcode (3) aufweist;
Aktivieren der Prepaid-Karte durch einen Kartenoperator (5), indem die Karte durch ein Lesegerät hindurchgeführt wird, um den mindestens einen Aktivierungscode (2) zu erfassen;
Aktivieren der Prepaid-Karte (1) an der Benutzerseite durch Übertragen des mindestens einen Geheimcodes (3) zusammen mit einem benutzerdefinierten Paßwort (8) an den Operator (5) der Prepaid-Karte (1);
Erzeugen eines Benutzerkontos an der Seite des Operators (5), wobei das Guthaben des Kontos dem Preis der Prepaid Karte (1) gleicht;
Empfangen, wenn der Benutzer einen Online-Kauf tätigt, eines eindeutigen Referenzcodes (7) von einem Händler (6), bei dem der Benutzer den Kauf tätigen möchte, wobei der Referenzcode den Händler identifiziert, und Übertragen des Referenzcodes (7) zusammen mit dem Geheimcode (3) und dem benutzerdefinierten Paßwort (8) an den Operator (5);
wobei der Kartenoperator (5) den Kauf beim Händler (6) freigibt.

2. Verfahren nach Anspruch 1, **dadurch gekennzeichnet, daß** im Schritt zum ersten Aktivieren der Prepaid-Karte (1) der Aktivierungscode durch den Kartenoperator (5) gelesen wird unmittelbar bevor die Prepaid-Karte (1) dem Benutzer übergeben wird.

3. Verfahren nach Anspruch 1, **dadurch gekennzeichnet, daß** der Schritt zum Übertragen des benutzerdefinierten Paßwortes (8) an den Kartenoperator (5) zusammen mit dem Geheimcode (3) bei jedem Kauf ausgeführt werden muß, den der Kunde tätigen möchte.

4. Verfahren nach Anspruch 1, **dadurch gekennzeichnet, daß** der auf der Prepaid-Karte vorhandene Geheimcode (3) nicht lesbar ist, wenn die Karte an den Benutzer übergeben wird.

## Revendications

1. Procédé pour réaliser une transaction de paiement en ligne à l'aide d'une carte, comprenant les étapes consistant à :
fabriquer une carte prépayée (1) destinée à être achetée par un utilisateur ;
ladite carte prépayée contenant au moins un code d'activation (2) et au moins un code secret (3) ;
activer ladite carte prépayée (1), par un manipulateur (5) de carte, en faisant passer ladite carte dans un lecteur pour détecter ledit au moins un code d'activation (2) ;
activer ladite carte prépayée (1) du fait de l'utilisateur en transmettant au manipulateur (5) de ladite carte prépayée (1) ledit au moins un code secret (3), ainsi qu'un mot de passe (8) défini par l'utilisateur ;
créer un compte de l'utilisateur dans ledit manipulateur (5), le solde dudit compte étant égal au coût de ladite carte prépayée (1) ;
lorsque ledit utilisateur fait un achat en ligne, recevoir, d'un détaillant (6) auprès duquel ledit utilisateur souhaite faire ledit achat, un code de référence exclusif (7) qui identifie ledit détaillant, et envoyer ledit code de référence (7) audit manipulateur (5) avec ledit code secret (3) et ledit mot de passe (8) défini par l'utilisateur ;
ledit manipulateur (5) de carte permettant l'achat chez ledit détaillant (6).

2. Procédé selon la revendication 1, **caractérisé en ce que** l'étape consistant à commencer par activer ladite carte prépayée (1) en lisant ledit code d'activation (2) est exécutée par le manipulateur (5) de carte juste avant que ladite carte prépayée (1) ne soit fournie à l'utilisateur.

3. Procédé selon la revendication 1, **caractérisé en ce que** ladite étape d'envoi dudit mot de passe (8) défini par l'utilisateur audit manipulateur (5) de carte, avec ledit code secret (3), doit être effectuée à chaque achat que souhaite faire l'utilisateur.

4. Procédé selon la revendication 1, **caractérisé en ce que** ledit code secret (3) présent sur ladite carte prépayée n'est pas lisible au moment de la remise de ladite carte audit utilisateur.
